# FASCICULE DE BREVET EUROPEEN

(11) **EP 0 951 462 B1**
(45) Date de publication et mention de la délivrance du brevet: **12.02.2003**
(21) Numéro de dépôt: 97911314.9
(22) Date de dépôt: 22.10.1997
(51) Int. Cl.: C04B 41/50

(54) **TRAITEMENT THERMOCHIMIQUE, EN ATMOSPHERE HALOGENEE, D'UN MATERIAU CARBONE, PAS, PEU OU TRES POREUX**
THERMOCHEMISCHE BEHANDLUNG EINES NICHT, WENIG ODER SEHR PORÖSEN KOHLENSTOFFHALTIGEN MATERIALS IN HALOGENIERTER ATMOSPHÄRE
THERMOCHEMICAL TREATMENT, IN HALOGENATED ATMOSPHERE, OF A CARBON-CONTAINING MATERIAL, NON-POROUS, SLIGHTLY OR VERY POROUS

(30) Priorité: 22.10.1996 FR 9612842
(43) Date de publication de la demande: 27.10.1999
(73) Titulaire: SOCIETE NATIONALE D'ETUDE ET DE CONSTRUCTION DE MOTEURS D'AVIATION, 75015 Paris (FR)
(72) Inventeur: MADEC, Yves, F-45000 Orleans (FR); VANDENBULCKE, Lionel, F-45100 Orleans (FR); ROBIN-BROSSE, Christian, F-33185 Le Haillan (FR); THEBAULT, Jacques, F-33200 Bordeaux (FR); GOUJARD, Stéphane, F-33700 Mérignac (FR)
(74) Mandataire: Le Roux, Martine
(86) Numéro de dépôt international: FR9701890
(87) Numéro de publication internationale: WO98017602

(56) Documents cités:
- FR-A- 2 304 590
- FR-A- 2 576 917
- US-A- 3 579 373

## Description

La présente invention a pour objet:
- le traitement thermochimique, selon la revendication 1, d'un matériau carboné présentant éventuellement une porosité ouverte, destiné à générer par cémentation activée un revêtement en carbure réfractaire à la surface et au sein dudit matériau dans l'hypothèse où il est poreux.

On propose un procédé performant pour générer des revêtements de carbures réfractaires sur les surfaces externes et internes, lorsqu'elles existent et sont accessibles, de matériaux carbonés. La réalisation de ce type de revêtements est d'un grand intérêt dans de nombreux domaines car lesdits revêtements confèrent auxdits matériaux carbonés des résistances élevées à l'usure, à l'ablation, à l'érosion ainsi qu'à l'oxydation et à la corrosion. Lesdits revêtements peuvent aussi protéger lesdits matériaux carbonés de la diffusion d'éléments en leur sein. Lesdits revêtements permettent également un meilleur mouillage des matériaux carbonés par des métaux fondus ... Le procédé de l'invention a notamment été développé dans le cadre de la réalisation de boucliers thermiques et de barrières de diffusion, particulièrement performants.

Le procédé de l'invention est un procédé de cémentation activée : il génère le carbure réfractaire à la surface (surface = surface externe + éventuellement surface interne) d'un matériau carboné à partir du carbone C dudit matériau traité thermiquement et d'un élément E amené sous forme de cément dans le milieu réactionnel et transporté sous forme d' halogénure à la surface dudit matériau carboné. Ledit procédé de l'invention fait intervenir conjointement un alliage cément donneur de type E-M (plus précisément xE-yM-zM') et un composé activant solide de formule MXₙ ; dans des conditions, de pression notamment, où ledit élément E peut être transporté (où le composé MXₙ est suffisamment stable pour que coexistent les halogénures MXₙ, sous formes solide et gazeuse, et EXₙ ,sous forme gazeuse). Lesdites conditions ainsi que la nature des éléments E, M, M', X sont précisées ci-après.

Un procédé de cémentation activé a déjà été décrit dans la demande FR-A-2 304 590 . Ledit procédé consiste à traiter le matériau carboné, pour générer à sa surface un revêtement en carbure d'un métal réfractaire, :
- à une température comprise entre 850°C et 1 250 ° C;
- à la pression atmosphérique , en atmosphère hydrogénée;
- en présence d'une poudre de cémentation comprenant, intimement mélangés, ledit métal réfractaire (Ti, Zr, Hf, Ta, Nb) et un halogénure dudit métal Téfractaire (TiCl₄, ZrCl₄) ...) ou un halogénure capable d'engendrer in situ ledit halogénure dudit métal réfractaire (halogénures d'ammonium (volatils), halogénures de cobalt, de nickel, de fer, d'aluminium).

Le procédé est mis en oeuvre avec le matériau à revêtir au contact de (dans) la poudre de cémentation qui renferme outre ledit métal réfractaire et ledit halogénure dudit métal réfractaire ou son précurseur, un diluant réfractaire (alumine, magnésie) et du chrome (catalyseur).

Selon ledit procédé de l'art antérieur, ledit métal réfractaire (E) est transporté par son propre halogénure (EXₙ), introduit directement ou généré in situ à partir d'un précurseur dudit halogénure (M'Xₙ) dont l'halogène est déplacé (ledit précurseur M'Xₙ ne reste pas solide, il n'intervient que pour générer EXₙ).

Le procédé de l'invention peut s'analyser comme un perfectionnement à, une optimisation de, ce procédé de l'art antérieur. En effet, ledit procédé de l'invention conduit à de très bons résultats avec une très large gamme de matériaux carbonés, pas, peu, voire très poreux (le procédé de l'art antérieur ne permet pas la réalisation de revêtements adéquats dans les parties internes de pièces traitées, au sein des pores de telles pièces ... on observe une hétérogénéité des épaisseurs de dépôt, notamment à cause d'une diffusion en phase gazeuse trop lente) ainsi qu'avec une plus large gamme d'éléments E incluant outre les métaux tels que le titane, le zirconium, l'hafnium, le tantale, le niobium et le chrome, les métalloïdes tels que le bore et le silicium. Les très bons résultats obtenus notamment avec ledit bore sont à mettre en avant. On note incidemment ici que les céments commerciaux préconisés pour la boruration des aciers ne permettent pas de transporter le bore à la surface de matériaux carbonés ...

Selon l'art antérieur, il a également été décrit la réalisation de revêtements dans les parties internes et externes de pièces métalliques, par apport d'un métal tel que l'aluminium (FR-A-2 576 916 et FR-A-2 576 917). Le procédé selon FR-A-2 576 916 utilise une phase gazeuse en écoulement entre l'entrée et la sortie du réacteur. Pour le transport du métal d'apport (E), le procédé selon FR-A-2 576 917 utilise un halogénure solide dudit métal d'apport (EXₙ = AlF₃, CrF₂ ou CrCl₂) ou un halogénure alcalin solide (NaX, KX, par exemple)(au contraire du procédé de la présente invention qui utilise un halogénure d'un métal M allié à E, de type MXₙ). En tout état de cause, les procédés selon FR-A-2 576 916 et FR-A-2 576 917 ont été développés dans un contexte tout à fait différent de celui de la présente invention. Ils sont mis en oeuvre pour générer des revêtements qui ne sont pas des carbures. La génération desdits revêtements ne met pas en jeu une migration de carbone au sein du matériau traité.

On propose donc, selon la présente invention, un procédé performant de traitement thermochimique en atmosphère halogénée (de cémentation activée), de matériaux carbonés pas, peu, voire très poreux (en d'autres termes, de matériaux carbonés présentant éventuellement une porosité ouverte), pour générer à la surface desdits matériaux (surface = surface externe + éventuellement surface interne) des revêtements de carbures réfractaires. Ledit procédé permet d'obtenir des revêtements de morphologie régulière (en termes notamment, d'épaisseur et de nature des phases), dont on peut mesurer dans le cas de matériaux poreux l'uniformité (il s'agit du rapport, exprimé en %, entre l'épaisseur du revêtement dans la zone centrale du matériau traité et l'épaisseur du revêtement sur la surface externe dudit matériau traité). Ledit procédé, maîtrisé, permet de générer, sur certains types de matériaux carbonés à grande porosité ouverte, des revêtement d'une uniformité supérieure à 70%. De tels résultats n'ont pu être obtenus avec les procédés de l'art antérieur. On obtient, par mise en oeuvre desdits procédés de l'art antérieur, des revêtements dont l'uniformité ne dépasse guère 10 %.

Ledit procédé de l'invention comprend le maintien du matériau carboné :
a ) à une température comprise entre 700 et 1 300°C,
b ) sous une pression réduite, comprise entre 0,1 et 30 kPa, d'hydrogène, d'un gaz rare ou d'un mélange de ces gaz;
c ) en présence d'un cément donneur constitué d'au moins un élément E, choisi parmi le titane, le zirconium, l'hafnium, le tantale, le niobium, le chrome, le silicium et le bore, allié à un élément M choisi parmi l'aluminium, le calcium, le chrome, l'yttrium et le magnésium et éventuellement allié à un élément modérateur M'; ledit élément modérateur M' intervenant obligatoirement si E = M = Cr et étant alors différent du chrome;
et d'un composé activant solide, peu volatil à ladite température de traitement, de formule MXₙ dans laquelle X consiste en le chlore ou le fluor, avantageusement en le fluor (et n, nombre entier, correspond à la valence de l'élément M).

De façon caractéristique, selon l'invention, la cémentation activée est mise en oeuvre, sous pression réduite, avec intervention d'une part de l'élément E (à transporter et à faire réagir avec le carbone du matériau pour générer le carbure attendu) allié à un élément M et d'autre part d'un halogénure (chlorure ou fluorure, fluorure de préférence) dudit même élément M, peu volatil, présent sous forme solide.

Le cément intervenant contient au moins un élément E allié à un élément M. Ledit cément contient généralement un seul élément E mais il n'est nullement exclu qu'il en contienne plusieurs. On préconise notamment de faire intervenir conjointement en son sein du bore et du silicium, pour générer un revêtement constitué des carbures de ces deux éléments, conférant au matériau traité une résistance à l'oxydation améliorée sur une plus large gamme de températures que celle conférée par un carbure de bore. Ledit cément est généralement un alliage binaire du type E-M. Il peut consister en un alliage du typé E-M-M', si l'on fait intervenir un élément modérateur M' pour fixer l'activité desdits éléments E et M dans ledit cément. Ledit cément est avantageusement élaboré, préalablement à la mise en oeuvre du traitement thermochimique, à la pression atmosphérique, de façon classique. Ceci n'est toutefois pas obligatoire.

En tout état de cause, pour générer selon l'invention un carbure de l'élément E à la surface d'un matériau carboné, on doit sélectionner préalablement un élément M convenable et si nécessaire un élément M'. Ledit élément M est en fait choisi dans la mesure où il existe un halogénure MXₙ convenable (solide, peu volatil à la température de traitement). La nature des éléments E et M étant fixée (E ≠ M) , on considère alors les alliages binaires E-M. S'il en existe, au sein desquels, les activités respectives des éléments E et M permettent le transport et la libération dudit élément E à la surface (externe et éventuellement interne) du matériau traité, on ne fait pas a priori intervenir d'élément modérateur M'. Dans le cas contraire, on préconise l'intervention d'un tel élément modérateur M' et donc celle d'un cément du type E-M-M'.

L'élément modérateur M' est en général un métal, avantageusement choisi parmi le fer, le nickel, le chrome, le cobalt, le molybdène et le tungstène.

Il est bien évident que si E = Cr, on choisit M ≠ Cr ou si E = M = Cr, on fait appel à M' ≠ Cr.

De façon surprenante, avec les éléments listés ci-dessus et rappelés ci-après :
E = Ti, Zr, Hf, Ta, Nb, Cr, Si, B et leurs alliages;
M = Al, Ca, Cr, Y, Mg;
M' = Fe, Ni, Cr, Co, Mo, W
   (étant entendu que si E ≠ M, M' intervient ou n'intervient pas et que si E = M = Cr, alors M' intervient et M' ≠ Cr);
X = Cl ou F (MXₙ restant solide à la température de traitement);
il est possible, dans le cadre de l'invention, de préparer des céments et des activants adéquats pour traiter efficacement des matériaux carbonés par mise en oeuvre d'un procédé de cémentation activé (ou pack-cémentation), dans le conditions ci-après :
- à une température comprise entre 700 et 1300°C,
- sous une pression réduite, comprise entre 0,1 et 30kPa, d'hydrogène, d'un gaz rare ou d'un mélange de ces gaz.

La température de traitement, comprise entre 700 et 1 300°C, est généralement inférieure à 1 050°C pour obtenir des revêtements de carbure d'éléments E différents du bore mais supérieure à 1 100°C, avantageusement supérieure à 1 200°C, pour obtenir des revêtements de carbure de bore.

On rappelle que, selon l'invention, de façon caractéristique, à ladite température de traitement, l'activant halogéné MXₙ reste solide, sous forme condensée (pendant toute la durée du traitement). A ladite température de traitement, il présente une faible tension de vapeur; en tout état de cause, une tension de vapeur inférieure à la pression à laquelle est mis en oeuvre le procédé.

Dans la mesure où, pour un élément donné, les chlorures sont toujours à la fois moins stables et plus volatils que les fluorures et où lesdits chlorures présentent également des points de fusion plus bas que ceux des fluorures correspondants, on comprend que l'activant halogéné intervenant dans le procédé de l'invention est avantageusement un fluorure (MFₙ).

Ledit activant halogéné MXₙ intervient en une quantité suffisante pour subsister à l'état solide, lorsque l'ensemble des halogénures est généré. On en fait avantageusement intervenir un excès, voire un large excès. Ainsi, peut-on préciser, à titre illustratif, que ledit activant halogéné intervient généralement à raison d'environ 5% en poids, par rapport au poids du cément.

De façon caractéristique, le procédé de l'invention est mis en oeuvre sous pression réduite d'un gaz protecteur.

Ledit gaz protecteur intervient pour éviter toute oxydation, pour confiner le milieu réactionnel et pour fixer la valeur de la pression totale à laquelle le traitement est effectué. Ladite valeur est théoriquement choisie bien supérieure à la somme des pressions partielles des espèces gazeuses halogénées, de sorte que celles-ci soient confinées dans l'enceinte de traitement. Ladite valeur est choisie, comme indiquée ci-dessus, entre 0,1 et 30 kPa. Elle est avantageusement choisie entre 0,5 et 15 kPa, encore plus avantageusement entre 0,5 et 5 kPa. En opérant en deçà de 0,1 kPa et au delà de 30kPa, il est délicat d'obtenir, pour des problèmes de diffusion, des revêtements convenables, notamment au sein de matériaux carbonés poreux.

Ledit gaz protecteur, qui doit permettre la libération de l'élément E à la surface des matériaux traités, peut consister :
- en un gaz rare, tel l'hélium ou l'argon. Ces deux gaz rares -légers - sont particulièrement préférés. On préconise tout particulièrement l'intervention de l'hélium, dans la mesure où ledit gaz est le plus léger, et permet donc d'accélérer la diffusion en phase gazeuse ;
- en un gaz réducteur, tel l'hydrogène. Les réactions supplémentaires de réduction que l'intervention d'un tel gaz rend possibles peuvent être opportunes;
- en un mélange de ces gaz : gaz rare, tel l'hélium ou l'argon et gaz réducteur, tel l'hydrogène.

Pour ce qui concerne la durée du traitement thermochimique de l'invention, elle est évidemment variable et comprise généralement entre quelques heures et quelques centaines d'heures. Elle dépend bien évidemment de l'épaisseur recherchée pour le revêtement de carbure et des difficultés d'infiltration au sein des matériaux poreux. Le procédé de l'invention permet l'obtention de revêtements dont l'épaisseur peut varier de quelques nanomètres à plusieurs dizaines de microns.

Le procédé de l'invention dont on a précisé ci-dessus les caractéristiques essentielles et dont on développe ci-après des variantes avantageuses de mise en oeuvre est adapté pour traiter tout type de matériaux carbonés. Par matériaux carbonés, on entend, dans la présente description et les revendications annexées, des matériaux qui renferment plus de 25 %, en atome, de carbone; ledit carbone intervenant libre ou combiné, notamment sous la forme d'un hémi-carbure tel SiC.

On rappelle ici qu'une partie du carbone dudit matériau carboné, traité selon l'invention, intervient pour générer le revêtement de carbure (en cela, le procédé de l'invention est un procédé de cémentation bien différent d'un procédé de type CVD ou CVI) et que le procédé de l'invention est adapté pour traiter des matériaux carbonés pas, peu ou très poreux. Plus précisément, on peut indiquer que le procédé de l'invention convient pour traiter aussi bien des matériaux non poreux que des matériaux présentant une porosité ouverte comprise entre 2 et 98 %, généralement entre 5 et 80 %. Il convient notamment, pour traiter :
- des pièces en graphite, non poreuses ou dont la porosité ouverte est généralement comprise entre 2 et 15 %;
- des matériaux composites carbone/carbone, totalement ou partiellement densifiés, dont la porosité ouverte est généralement comprise entre 5 et 15%;
   (Sur ce type de matériaux, relativement densifiés, on vise principalement, selon l'invention, à générer un revêtement superficiel, qui peut présenter une épaisseur. importante.)
- des préformes fibreuses, à forte porosité ouverte, généralement comprise entre 60 et 80 % et notamment des préformes fibreuses en carbone non densifiées ou des préformes fibreuses non densifiées à base de fibres SiC (du type Nicalon® ou autres) pré-traités pour présenter une couche superficielle de carbone ou non pré-traitées;
   (Sur ce type de matériaux non densifiés, on vise généralement à obtenir, selon l'invention, un gainage des fibres, de faible épaisseur, de sorte que les propriétés mécaniques desdites fibres soient peu modifiées.)
- des mousses de carbone, de très faible densité, dont la porosité ouverte est généralement comprise entre 50 et 98 %;
   (Sur ce dernier type de matériaux carbonés, très poreux, on parvient à obtenir, selon l'invention, des dépôts homogènes, au coeur de la mousse. On élabore ainsi un matériau isolant thermique, de faible densité, qui possède une bonne tenue mécanique à hautes températures).

Quel que soit le substrat carboné traité, à un quelconque stade de sa fabrication, la couche de carbure générée en augmente la dureté, en renforce la résistance à l'oxydation et à la corrosion chimique, constitue une barrière de diffusion, notamment contre l'oxygène ...

Le procédé de l'invention, tel que précisé ci-dessus, peut être mis en oeuvre selon plusieurs variantes.

Pour ce qui concerne la disposition relative des réactifs - matériau carboné traité, cément, activant - on note que :
- le matériau carboné traité peut être plongé, au moins partiellement, dans le cément ou maintenu en phase gazeuse, dans une zone proche dudit cément. Le traitement des matériaux pas ou peu poreux est avantageusement mis en oeuvre avec lesdits matériaux disposés dans le cément (un tel contact : matériau/cément n'implique pas, dans les conditions de mise en oeuvre du procédé, d'adhérence gênante dudit cément audit matériau et n'impose donc pas de post-traitement lourd pour débarrasser le matériau traité dudit cément) tandis que celui des matériaux poreux ou très poreux est avantageusement mis en oeuvre avec lesdits matériaux, maintenus en phase gazeuse (sans contact avec le cément). Selon une autre variante de mise en oeuvre du procédé de l'invention, on fait intervenir le cément (ou un mélange de poudres précurseur dudit cément) sous forme d'une barbotine, que l'on applique en surface du matériau à traiter. Plus précisément, on peut procéder de la manière suivante :
   + on réalise dans un premier temps un cément sous forme pulvérulente,
   + on prépare ensuite une suspension de ladite poudre de cément en utilisant un solvant (eau, par exemple) et éventuellement un liant fugitif (alcool polyvinylique, par exemple);
   + on applique (par peinture, par exemple) la barbotine ainsi préparée en surface du matériau carboné à traiter (sur toute sa surface ou sur seulement une partie de celle-ci);
   + on traite thermochimiquement selon l'invention ledit matériau revêtu, au moins partiellement, de ladite barbotine.

On obtient, après refroidissement, ledit matériau carboné transformé en surface ainsi qu'en profondeur, dans sa porosité sous-jacente (si elle existe).

On peut notamment traiter ainsi des pièces, telles des disques de frein d'avion en composite carbone/carbone, pour les protéger, au moins localement (sur leurs faces frottantes pour ce qui concerne lesdits disques de frein) de la corrosion. La couche de carbure ainsi générée peut également être utilisée, comme sous-couche d'accrochage pour un autre revêtement protecteur;
- le composé activant solide n'est avantageusement en contact direct, ni avec le cément, ni avec le matériau carboné. Dans une variante de réalisation particulièrement préférée, il est maintenu, distant de l'ensemble cément/matériau carboné, à une température inférieure de 20 à 200°C, plus généralement de 50 à 100 °C, à la température de traitement dudit matériau carboné (température de l'ensemble cément/matériau carboné). On minimise ainsi les risques de re-condensation du composé activant MXₙ, à la surface du matériau traité. Le contact activant/cément pour une mise en oeuvre du procédé de l'invention à une température unique donnée n'est pas totalement exclu, notamment pour traiter des matériaux pas ou peu poreux, avec des halogénures relativement volatils mais il est acquis par les inventeurs que les meilleurs résultats sont obtenus, notamment avec des matériaux poreux, lorsque ledit composé activant, peu volatil, est maintenu solide, dans une zone où règne une température θ_{A} tandis que l'ensemble cément/matériau carboné (ledit matériau carboné se trouvant généralement au moins partiellement dans ledit cément ou en phase gazeuse dans une zone très proche de celui-ci) est maintenu dans une autre zone, à une température θ_{C} : θ_{C} > θ_{A}. La différence de température, Δθ = θ_{C} - θ_{A}, peut-être, comme préconisée, relativement importante. Ainsi, de telles différences de températures, supérieures à 100°C, sont-elles préconisées pour générer des revêtements de carbure de bore, d'épaisseurs conséquentes. Cette variante préférée de mise en oeuvre du procédé de l'invention avec gradient thermique, selon laquelle le composé activant solide est maintenu dans une zone "froide" par rapport à la zone "chaude" de traitement du matériau carboné (et du cément) est particulièrement originale.

Le procédé de l'invention, comme décrit ci-dessus, est mis en oeuvre avec un cément donneur : un alliage du type E-M ou E-M-M'. Il s'agit d'un véritable alliage et, en aucune façon, d'un simple mélange de poudres. Ledit alliage peut avoir été élaboré, préalablement à la mise en oeuvre du procédé de l'invention, totalement indépendamment de celle-ci. Il peut ainsi résulter d'un traitement thermochimique des poudres (E, M, éventuellement M') connu en lui-même ou d'une division, en particules d'une grande surface spécifique, d'un alliage métallurgique (obtenu par un procédé métallurgique classique). Ledit alliage peut, selon une autre variante, être élaboré, dans le cadre de la mise en oeuvre du procédé de l'invention, dans le dispositif prévu pour celle-ci, en préambule ou comme partie intégrante dudit procédé, en présence du composé activant . Selon la première hypothèse, on traite thermiquement, à la pression atmosphérique, un mélange de poudres adéquat, renfermant ledit composé activant. Selon la seconde, on démarre le procédé de l'invention (sous pression réduite) en présence du mélange de poudre et du composé activant (ledit mélange de poudres se transformant en alliage, lors de la montée en température).

De manière générale, le cément donneur, nécessaire à la mise en oeuvre du procédé de l'invention est avantageusement élaboré, préalablement à la mise en oeuvre dudit procédé, sous pression atmosphérique, soit par un traitement thermochimique mis en oeuvre en présence d'un activant (traitement indépendant ou préalable au traitement thermochimique de l'invention) soit par un traitement de type métallurgique suivi de la division de l'alliage obtenu (traitement indépendant du traitement thermochimique de l'invention).

Selon une variante particulièrement préférée, ledit cément est réalisé en préambule du traitement de l'invention, dans un dispositif comportant une zone chaude et une zone froide, le mélange de poudres : E, M, éventuellement M' et MXₙ étant réalisé dans la zone chaude et l'activant halogéné MXₙ étant ensuite récupéré condensé dans la zone froide ...

A l'issue du procédé de l'invention - issue déterminée en fonction de l'objectif fixé i.e. l'obtention de couche(s) de carbure d'une épaisseur donnée - on peut obtenir avec certains éléments donneurs E, tels le tantale, le niobium et le chrome, plusieurs carbures dans un revêtement multiphasé. De tels revêtements multiphasés sont per se intéressants. Il peut toutefois s'avérer opportun de faire subir un traitement thermique complémentaire aux matériaux carbonés revêtus desdits revêtements multiphasés pour transformer ceux-ci en les carbures monophasés correspondants; carbures monophasés en principe plus réfractaires.

De tels traitements thermiques de recuit, que l'on peut qualifier de traitement de diffusion, sont familiers à l'homme du métier. Ils sont mis en oeuvre à la pression atmosphérique, en absence de tout activant halogéné. Ainsi peut-on traiter, à une température voisine de 1 300°C, des matériaux carbonés qui ont été revêtus d'un revêtement biphasé TaC + Ta₂C à l'issu du traitement thermochimique de l'invention pour transformer ledit revêtement biphasé en un revêtement monophasé TaC.

Ledit carbure TaC est connu comme le plus réfractaire des carbures; les revêtements en ledit carbure sont parmi les plus efficaces, comme barrière de diffusion.

Le procédé de l'invention, tel que décrit ci-dessus et illustré ci-après, est avantageusement mis en oeuvre, dans les conditions ci-après, pour générer des revêtements de carbure de zirconium, de carbure de tantale, de carbure de bore. . Revêtements de carbure de zirconium :

On opère avantageusement à une température inférieure à 1 050°C, généralement comprise entre 800 et 1 000°C, sous une pression réduite d'un gaz rare choisi parmi l'hélium et l'argon et consistant avantageusement en l'hélium, en présence d'un cément donneur Zr-Al et d'un composé activant AlF₃. Le gaz rare est préféré à l'hydrogène dans la mesure où il a été constaté, expérimentalement, qu'avec ledit gaz rare on obtient des revêtements uniformes, de morphologie régulière ... Des morphologies irrégulières (un état de surface en "paillettes") ont été obtenues à coeur de préformes traitées sous hydrogène et peuvent se montrer dommageable dans l'optique d'une densification ultérieure de celles-ci ...
. Revêtement de carbure de tantale :
   On opère avantageusement à une température inférieure à 1 050°C, généralement comprise entre 700 et 1 000°C, sous une pression réduite d'hydrogène, en présence d'un cément donneur Ta-Cr et d'un composé activant CrF₂. Dans ce cas de figure, l'intervention d'un gaz réducteur se révèle très bénéfique. Comme précisé ci-dessus, le carbure obtenu à l'issue d'un tel traitement thermochimique est biphasique (TaC + Ta₂C); il est éventuellement recuit pour être converti en un revêtement de carbure de tantale, monophasique (TaC).
. Revêtement de carbure de bore:
   On opère avantageusement à une température supérieure à 1 100°C, généralement comprise entre 1 200 et 1 300°C, sous une pression réduite d'hydrogène, en présence d'un cément donneur B-Mg ou B-Y et d'un composé activant MgF₂ ou YF₃ (MgF₂ étant associé à B-Mg et YF₃ à B-Y). Dans ce contexte, l'intervention d'un gaz réducteur est également très bénéfique, tout particulièrement lorsque l'yttrium est utilisé.

Les bons résultats obtenus, dans le cadre de la présente invention, avec le bore sont, comme déjà souligné, à mettre en avant. Ils sont relativement inattendus, si l'on considère notamment le caractère électropositif dudit élément bore, a priori insuffisant ...

. Les variantes du procédé de l'invention, précisées ci-dessus pour les éléments E=Zr, Ta ou B sont, elles aussi, notamment pour le traitement de matériaux carbonés poreux, avantageusement mises en oeuvre avec le composé activant maintenu à une température inférieure à la température de traitement dudit matériau carboné (et du cément).

Le traitement thermochimique de la présente invention peut être effectué dans un dispositif tel que décrit ci-dessous. Ledit dispositif comprend :
- une première enceinte partiellement étanche dans laquelle sont appelés à être disposés et à réagir les réactifs; ladite première enceinte étant avantageusement en acier inoxydable ou en graphite;
- une seconde enceinte, dans laquelle est disposée ladite première enceinte; ladite seconde enceinte étant étanche vis-à-vis de l'atmosphère ambiante et associée à des moyens susceptibles de mettre en circulation en son sein de l'hydrogène, un gaz rare ou un mélange de ces gaz sous pression réduite;
- des moyens de chauffe pour assurer le maintien et le contrôle de la température de traitement au sein desdites enceintes; lesdits moyens de chauffe étant avantageusement capables de maintenir une différence de température de 20 à 200°C entre deux zones de ladite première enceinte.

L'ensemble comprenant le matériau à traiter, le cément donneur et le composé activant est destiné à être placé dans ladite première enceinte. On préconise de mettre en oeuvre le procédé dans une première enceinte en graphite lorsque l'on souhaite éviter la présence de fer dans le milieu réactionnel et/ou lorsque l'on opère à haute température, pour l'élaboration de carbone de bore, par exemple. Dans les contextes où l'on se trouve exonéré de telles contraintes, on préconise de mettre en oeuvre le procédé dans une première enceinte en acier inoxydable. Ladite première enceinte est maintenue partiellement étanche, généralement grâce à un bouchon, de sorte que l'atmosphère réactive soit confinée en son sein. Il peut ainsi s'établir, lors de la mise en oeuvre du procédé, un régime de proche équilibre thermodynamique entre la phase gazeuse et le cément d'une part, entre ledit cément et le substrat carboné traité d'autre part; si le processus est limité par la diffusion en phase solide, ce qui est vivement souhaité.

Ladite première enceinte peut avantageusement être équipée de moyens pour maintenir le matériau à traiter près du cément sans contact avec celui-ci ainsi que de moyens type nacelle pour contenir à distance l'activant halogéné. Avec de tels moyens, on peut assurer la séparation physique matériau carboné traité / cément ainsi que, si désirée, la séparation physique matériau carboné traité / cément / activant halogéné. Cette dernière séparation physique est avantageusement associée, comme précisé ci-dessus, à des moyens de chauffage adéquats, capables de maintenir une différence de température entre les zones où l'on trouve d'une part l'ensemble matériau carboné traité / cément (en mélange ou séparé physiquement) et d'autre part l'activant halogéné.

La première enceinte, partiellement étanche, est disposée dans une seconde enceinte, étanche vis-à-vis de l'extérieur, et dans laquelle est mis en circulation un gaz (l'hydrogène, un gaz rare, tel que l'argon et l'hélium ou un mélange de ces gaz) sous pression réduite.

Lesdites première et seconde enceintes sont associées à des moyens de chauffe capables d'assurer et de maintenir la température de traitement désirée au sein de celles-ci. Lesdits moyens de chauffe sont, comme déjà précisé ci-dessus, avantageusement capables de maintenir et contrôler un gradient de température entre une zone froide où est localisé l'activant halogéné et une zone chaude où l'on trouve, en mélange ou séparés physiquement, le cément et le matériau carboné à traiter.

Selon une variante pratique de réalisation, lesdites première et seconde enceintes sont disposées dans un four de géométrie cylindrique.

L'invention est illustrée, sous ses différents aspects, par les exemples ci-après.

### EXEMPLE 1

Traitement thermochimique hors-cément générant des couches de carbure de zirconium sur des préformes fibreuses tridimensionnelles (3D) en carbone à 75 % de porosité.

Dans une enceinte semi-étanche en acier inoxydable, on place un mélange de poudres d'aluminium et de zirconium en proportions de 38,2 % at (15,5 % pds) de Al et 61,8 % at (84,5 % pds) de Zr auquel on ajoute une poudre de fluorure d'aluminium AlF₃, à raison de 5 % en poids de la charge. L'ensemble est porté à 927°C (1200 K), sous pression atmosphérique maintenue par un balayage d'hydrogène, pendant 36 heures. A l'issue de ce traitement, un alliage (ou cément) aluminium-zirconium de composition 38,2 % at de Al et 61,8 % at de Zr est obtenu, qui se présente sous la forme d'un mélange de poudres et de granulés poreux ; le fluorure d'aluminium a été déplacé en totalité vers la paroi la plus froide de l'enceinte semi-étanche, où il s'est recondensé.

Une portion dudit alliage Al-Zr est prélevée et introduite dans la même enceinte semi-étanche, dans sa partie qui verra la température la plus chaude. Une pièce de préforme fibreuse 3D en carbone de 20 x 15 x 5 mm³, présentant 75 % de porosité, est suspendue au-dessus du cément, sans qu'aucun contact n'existe avec ce dernier. L'ensemble est placé dans la partie médiane d'un four tubulaire à manchon et porté à une température de 827°C (1100 K), de telle sorte qu'il existe une différence de 100° entre la température la plus chaude où se trouve la pièce à traiter et le cément Al-Zr et la température la plus froide où se trouve le solide AlF₃. Dans ces conditions, les activités théoriques de l'aluminium et du zirconium dans l'alliage sont a_{Al}= 1,3.10⁻⁴ et a_{Zr} = 3,3.10⁻¹. Un traitement de 16 heures, sous une pression totale de 2,67 kPa maintenue par un balayage d'hélium est effectué. A l'issue de ce traitement, un revêtement de carbure de zirconium adhérent, de morphologie très régulière, est obtenu sur toutes les fibres constituant la préforme. Son épaisseur varie de 110 à 100 nm entre l'extérieur et le centre de la pièce.

### EXEMPLE 2

Traitement thermochimique hors-cément générant des couches de carbure de zirconium sur des composites carbone/carbone à 10-15 % de porosité.

L'élaboration de l'alliage Al-Zr en présence de l'activant AlF₃ est réalisée dans les mêmes conditions que celles de l'exemple 1. La composition du mélange de poudres est cette fois de 45,8 % at (20 % pds) de Al et 54,2 % at (80 % pds) de Zr.

Le traitement d'une pièce composite carbone/carbone de 20 x 15 x 5 mm³, présentant 10 à 15 % de porosité et suspendue au-dessus de l'alliage précédent (sans qu'aucun contact n'existe avec ce dernier), est réalisé à 927°C (1200 K) pendant une durée de 100 heures. Dans ces conditions, les activités théoriques de l'aluminium et du zirconium dans l'alliage sont a_{Al} = 8,8.10⁻³ et a_{Zr} = 2,9.10⁻². La pression totale est de 2,67 kPa, maintenue par un balayage d'hélium. La différence de température entre la zone de traitement et la zone où l'activant AlF₃ est solide est de 50°. L'épaisseur du revêtement de carbure de zirconium obtenu, adhérent et de morphologie très régulière, varie de 2,9 à 1,8 µm entre l'extérieur et le centre de la pièce.

### EXEMPLE 3

Traitement thermochimique hors-cément générant des couches de carbures de tantale sur des préformes fibreuses tridimensionnelles (3D) en carbone à 75 % de porosité - Traitement de diffusion à haute température générant des revêtements monophasés de carbure de tantale sur des préformes fibreuses tridimensionnelles (3D) en carbone à 75 % de porosité.
a) Dans une enceinte semi-étanche en acier inoxydable, on introduit simultanément
   - dans la partie qui verra la température la plus chaude, un mélange de poudres de chrome et de tantale en proportions de 28 % at (10 % pds) de Cr et 72 % at (90 % pds) de Ta ;
   - dans la partie qui verra la température la plus froide, une poudre de fluorure de chrome CrF₂ (5 % du poids du mélange Cr-Ta), portée par une nacelle en graphite.

   Dans une première opération, l'ensemble est porté à une température de 777°C (1050 K) dans la zone chaude et 727°C (1000 K) dans la zone froide, sous une pression totale de 3 kPa maintenue par un balayage d'hydrogène autour de l'enceinte semi-étanche, pendant 36 heures.
   L'alliage ainsi obtenu (ou en variante les poudres de métaux purs dans les mêmes proportions) est utilisé pour traiter une pièce de préforme fibreuse 3D en carbone de 20 x 5 x 5 mm³ présentant 75 % de porosité, suspendue au-dessus du mélange de poudres sans qu'aucun contact n'existe entre les deux parties.
   L'ensemble est introduit dans la partie médiane d'un four tubulaire à manchon et porté à une température de 777°C (1 050 K), de telle sorte qu'il existe une différence de 50° entre la température la plus chaude où se trouve la pièce à traiter et le cément Cr-Ta (en variante le mélange de poudres) et la température la plus froide où se trouve le solide CrF₂. Dans ces conditions, les activités théoriques du chrome et du tantale dans le cément sont a_{Cr}=2,3.10⁻¹ et a_{Ta} = 9,9.10⁻¹. Le traitement est effectué sous une pression totale de 2,67 kPa maintenue par un balayage d'hydrogène, pendant une durée de 8 heures. A l'issue de ce traitement, un revêtement biphasé TaC + Ta₂C adhérent, de morphologie très régulière, est obtenu sur toutes les fibres constituant la préforme. Son épaisseur est de l'ordre de 20 nm ; son uniformité est supérieure à 90 % (ladite uniformité est le rapport exprimé en %, entre l'épaisseur du revêtement dans la zone centrale de la préforme et l'épaisseur du revêtement à la surface externe de ladite préforme).
b) La pièce revêtue suivant l'exemple 3a est introduite dans une enceinte semi-étanche en graphite n'ayant fait l'objet d'aucun traitement de cémentation ; la pièce est également portée par un outillage en graphite. L'ensemble est maintenu à une température de 1 300°C (1573 K) pendant 48 heures, sous pression atmosphérique fixée par un balayage d'hélium. A l'issue de ce traitement, un revêtement monophasé TaC est obtenu, qui conserve l'épaisseur, l'uniformité, l'adhérence et la morphologie régulière des revêtements biphasés TaC + Ta₂C obtenus dans l'exemple 3a.

### EXEMPLE 4

Traitement thermochimique hors-cément employant l'activant MgF₂ et générant des couches de carbure de bore sur des préformes fibreuses tridimensionnelles (3D) en carbone à 60 % de porosité.

Dans une enceinte semi-étanche en graphite, on place simultanément
- dans la partie qui verra la température la plus chaude, un mélange de poudres de bore et de magnésium en proportions de 95,3 % at (90 % pds) de B et 4,7 % at (10 % pds) de Mg, et une pièce de préforme fibreuse 3D en carbone de 15 x 10 x 5 mm³ présentant environ 60 % de porosité, suspendue au-dessus du mélange de poudres par un outillage en graphite sans qu'aucun contact n'existe entre les deux parties;
- dans la partie qui verra la température la plus froide, des cristaux de fluorure de magnésium MgF₂ (20 % en poids du mélange B-Mg), portés par une nacelle en graphite.

L'ensemble est introduit dans la partie médiane d'un four tubulaire à manchon et porté à une température de 1 227°C (1500 K), de telle sorte qu'il existe une différence de 70° entre la température la plus chaude où se trouve la pièce à traiter et le mélange de poudres et la température la plus froide où se trouve le solide MgF₂. Le traitement est effectué sous une pression totale de 1,33 kpa maintenue par un balayage d'hydrogène, pendant une durée de 18 heures. Un alliage Mg-B se forme pendant la montée en température du four, par fusion du magnésium dès 650°C (923 K). Dans ces conditions, l'activité théorique du bore est maintenue égale à 1 et l'activité du magnésium est inférieure à environ 10⁻². A l'issue de ce traitement, un revêtement de carbure de bore rhomboédrique adhérent, de morphologie régulière, est obtenu sur toutes les fibres constituant la préforme; son épaisseur varie de 140 à 85 nm entre l'extérieur et le centre de la pièce.

### EXEMPLE 5

Traitement thermochimique dans le cément générant des couches de carbure de bore sur des composites carbone/carbone à 10-15 % de porosité.

La composition du mélange de poudres B-Mg et sa disposition par rapport à l'activant solide MgF₂ sont les mêmes que dans l'exemple 4. La pièce à traiter est un composite carbone/carbone de 25 x 8 x 20 mm³ présentant 10 à 15 % de porosité ; elle est placée au sein du mélange de poudres. Le traitement thermochimique est effectué dans les mêmes conditions que celles de l'exemple 5, la durée étant portée à 32 heures et la pression totale à 0,67 kPa. A l'issue de ce traitement, la pièce est extraite du cément et débarrassée aisément des restes de celui-ci, à l'aide d'une brosse à poils souples en matière synthétique. A cette fin de "nettoyage", il n'est nul besoin de mettre en oeuvre une opération coûteuse, type usinage, dans la mesure où le cément n'adhère pas à la pièce traitée.

Un revêtement de carbure de bore rhomboédrique adhérent, de morphologie relativement régulière, est obtenu sur toutes les parties poreuses accessibles à la phase gazeuse. Son épaisseur varie de 1 à 0,5 µm entre l'extérieur et le centre de la pièce.

## Revendications

1. Traitement thermochimique d'un matériau carboné, présentant éventuellement une porosité ouverte, destiné à générer par cémentation activée un revêtement en carbure réfractaire à la surface et au sein dudit matériau dans l'hypothèse où il est poreux; ledit traitement comprenant le maintien dudit matériau :
a ) à une température comprise entre 700 et 1 300°C;
b ) sous une pression réduite, comprise entre 0,1 et 30 kPa, d'hydrogène, d'un gaz rare ou d'un mélange de ces gaz;
c ) en présence d'un cément donneur constitué d'au moins un élément E, choisi parmi le titane, le zirconium, l'hafnium, le tantale, le niobium, le chrome, le silicium et le bore, allié à un élément M choisi parmi l'aluminium, le calcium, le chrome, l'yttrium et le magnésium et éventuellement allié à un élément modérateur M'; ledit élément modérateur M' intervenant obligatoirement si E = M = Cr et étant alors différent du chrome;
et d'un composé activant solide, peu volatil à ladite température de traitement, de formule MXₙ dans laquelle X consiste en le chlore ou le fluor, avantageusement en le fluor.

2. Traitement thermochimique selon la revendication 1, **caractérisé en ce que** ledit élément modérateur M' est un métal choisi parmi le fer, le nickel, le chrome, le cobalt, le molybdène et le tungstène.

3. Traitement thermochimique selon l'une des revendications 1 ou 2, **caractérisé en ce que** le matériau carboné traité présente une porosité ouverte comprise entre 2 et 98 % et consiste avantageusement en une pièce en graphite, un matériau composite carbone/carbone totalement ou partiellement densifié, une préforme fibreuse en carbone non densifiée, une préforme non densifiée à base de fibres SiC pré-traitées ou non pour présenter une couche superficielle de carbone, une mousse de carbone.

4. Traitement thermochimique selon l'une quelconque des revendications 1 à 3, **caractérisé en ce que** ledit matériau carboné traité est plongé, au moins partiellement, dans ledit cément ou maintenu en phase gazeuse, dans une zone proche dudit cément.

5. Traitement thermochimique selon l'une quelconque des revendications 1 à 4, **caractérisé en ce que** ledit composé activant solide n'est en contact direct ni avec ledit cément ni avec le matériau carboné traité; et est avantageusement maintenu à une température inférieure de 20 à 200 °C à la température dudit matériau carboné traité.

6. Traitement thermochimique selon l'une quelconque des revendications 1 à 5, **caractérisé en ce que** ledit cément donneur est élaboré préalablement, à la pression atmosphérique, avantageusement en présence d'un composé activant.

7. Traitement thermochimique selon l'une quelconque des revendications 1 à 6, **caractérisé en ce qu'**il comprend en outre un traitement thermique de recuit à plus haute température pour transformer les revêtements multiphasés de carbure de tantale, de niobium ou de chrome obtenus en des revêtements monophasés.

8. Traitement thermochimique selon l'une quelconque des revendications 1 à 7, **caractérisé en ce qu'**il est mis en oeuvre :
- à une température inférieure à 1 050°C,
- sous une pression réduite d'un gaz rare choisi parmi l'hélium et l'argon, consistant avantageusement en l'hélium,
- en présence d'un cément donneur Zr-Al et d'un composé activant AlF₃; pour générer un revêtement de carbure de zirconium.

9. Traitement thermochimique selon l'une quelconque des revendications 1 à 7, **caractérisé en ce qu'**il est mis en oeuvre :
- à une température inférieure à 1 050°C,
- sous une pression réduite d'hydrogène,
- en présence d'un cément donneur Ta-Cr et d'un composé activant CrF₂; pour générer un revêtement biphasé TaC+Ta₂C;
et **en ce qu'**il comprend éventuellement un traitement thermique additionnel de recuit, avantageusement mis en oeuvre à une température voisine de 1 300°C, pour générer un revêtement monophasé TaC.

10. Traitement thermochimique selon l'une quelconque des revendications 1 à 7, **caractérisé en ce qu'**il est mis en oeuvre :
- à une température supérieure à 1 100°C,
- sous une pression réduite d'hydrogène,
- en présence d'un cément donneur B-Mg ou B-Y et d'un composé activant MgF₂ ou YF₃;
pour générer un revêtement de carbure de bore.

11. Traitement thermochimique selon l'une quelconque des revendications précédentes, **caractérisé en ce qu'**il est mis en oeuvre dans un dispositif comprenant :
- une première enceinte partiellement étanche dans laquelle sont appelés à être disposés et à réagir les réactifs; ladite première enceinte étant avantageusement en acier inoxydable ou en graphite;
- une seconde enceinte, dans laquelle est disposée ladite première enceinte; ladite seconde enceinte étant étanche vis-à-vis de l'atmosphère ambiante et associée à des moyens susceptibles de mettre en circulation en son sein de l'hydrogène, un gaz rare ou un mélange de ces gaz sous pression réduite;
- des moyens de chauffe pour assurer le maintien et le contrôle de la température de traitement au sein desdites enceintes ; lesdits moyens de chauffe étant avantageusement capables de maintenir une différence de température de 20 à 200°C entre deux zones de ladite première enceinte.

## Patentansprüche

1. Thermochemische Behandlung eines kohlenstoffhaltigen Materials, das gegebenenfalls eine offene Porosität besitzt, die dazu geeignet ist, durch aktivierte Zementation eine Beschichtung aus hitzebeständigem Carbid an der Oberfläche des Materials und, unter der Voraussetzung, daß es porös ist, in seinem Inneren zu erzeugen, wobei die Behandlung aufweist das Halten des Materials:
a) bei einer Temperatur zwischen 700 und 1.300 °C;
b) unter einem verringerten Druck zwischen 0,1 und 30 kPa von Wasserstoff, einem Edelgas oder einem Gemisch dieser Gase;
c) in Anwesenheit eines Donator-Zementationsmittels, bestehend aus mindestens einem Element E, das ausgewählt ist unter Titan, Zirkonium, Hafnium, Tantal, Niob, Chrom, Silicium und Bor, in Zusammensetzung mit einem Element M, das ausgewählt ist unter Aluminium, Calcium, Chrom, Yttrium und Magnesium, und gegebenenfalls in Zusammensetzung mit einem Moderatorelement M', wobei das Moderatorelement M' obligatorisch vorhanden ist, wenn E = M = Cr, und dann von Chrom verschieden ist;
und einer festen, bei der Behandlungstemperatur wenig flüchtigen Aktivierungsverbindung der Formel MXₙ, in der X aus Chlor oder Fluor, vorteilhafterweise aus Fluor, besteht.

2. Thermochemische Behandlung nach Anspruch 1, **dadurch gekennzeichnet, daß** das Moderatorelement M' ein Metall ist, das ausgewählt ist aus Eisen, Nickel, Chrom, Cobalt, Molybdän und Wolfram.

3. Thermochemische Behandlung nach Anspruch 1 oder 2, **dadurch gekennzeichnet, daß** das behandelte kohlenstoffhaltige Material eine offene Porosität zwischen 2 und 98 % besitzt und vorteilhafterweise besteht aus einem Teil aus Grafit, einem ganz oder teilweise verdichteten Kohlenstoff/Kohlenstoff-Verbundmaterial, einer nicht verdichteten Faservorform aus Kohlenstoff, einer nicht verdichteten Vorform auf der Basis von SiC-Fasern, die nicht vorbehandelt wurden oder vorbehandelt wurden, damit sie eine Oberflächenschicht aus Kohlenstoff besitzen, einem Kohlenstoff-Schaum.

4. Thermochemische Behandlung nach einem der Ansprüche 1 bis 3, **dadurch gekennzeichnet, daß** das behandelte kohlenstoffhaltige Material zumindest zum Teil in das Zementationsmittel eingebettet wird oder in einer Gasphase in einem Bereich nahe an dem Zementationsmittel gehalten wird.

5. Thermochemische Behandlung nach einem der Ansprüche 1 bis 4, **dadurch gekennzeichnet, daß** die feste Aktivierungsverbindung weder mit dem Zementationsmittel noch mit dem behandelten kohlenstoffhaltigen Material in direktem Kontakt ist und vorteilhafterweise bei einer Temperatur gehalten wird, die 20 bis 200 °C unter der Temperatur des behandelten kohlenstoffhaltigen Materials liegt.

6. Thermochemische Behandlung nach einem der Ansprüche 1 bis 5, **dadurch gekennzeichnet, daß** das Donator-Zementationsmittel vorab bei Atmosphärendruck, vorteilhafterweise in Anwesenheit einer Aktivierungsverbindung, hergestellt wird.

7. Thermochemische Behandlung nach einem der Ansprüche 1 bis 6, **dadurch gekennzeichnet, daß** sie außerdem eine thermische Temperbehandlung bei höherer Temperatur aufweist, um die erhaltenen vielphasigen Beschichtungen aus Tantal-, Niob- oder Chromcarbid in einphasige Beschichtungen umzuwandeln.

8. Thermochemische Behandlung nach einem der Ansprüche 1 bis 7, **dadurch gekennzeichnet, daß** sie durchgeführt wird:
- bei einer Temperatur unterhalb von 1.050 °C,
- unter einem verringerten Druck eines Edelgases, das ausgewählt ist aus Helium und Argon, wobei es vorteilhafterweise aus Helium besteht,
- in Anwesenheit eines Donator-Zementationsmittels Zr-AI und einer Aktivierungsverbindung AlF₃;
um eine Beschichtung aus Zirkoniumcarbid zu erzeugen.

9. Thermochemische Behandlung nach einem der Ansprüche 1 bis 7, **dadurch gekennzeichnet, daß** sie durchgeführt wird:
- bei einer Temperatur unterhalb von 1.050 °C,
- unter einem verringerten Wasserstoff-Druck,
- in Anwesenheit eines Donator-Zementationsmittels Ta-Cr und einer Aktivierungsverbindung CrF₂;
um eine zweiphasige Beschichtung von TaC+Ta₂C zu erzeugen;
und dadurch, daß sie gegebenenfalls eine zusätzliche thermische Temperbehandlung, die vorteilhafterweise bei einer Temperatur in der Nähe von 1.300 °C durchgeführt wird, aufweist, um eine einphasige Beschichtung aus TaC zu erzeugen.

10. Thermochemische Behandlung nach einem der Ansprüche 1 bis 7, **dadurch gekennzeichnet, daß** sie durchgeführt wird:
- bei einer Temperatur oberhalb von 1.100 °C,
- unter einem verringerten Wasserstoff-Druck,
- in Anwesenheit eines Donator―Zementationsmittels B―Mg oder B―Y und einer Aktivierungsverbindung MgF₂ oder YF₃;
um eine Beschichtung aus Borcarbid zu erzeugen.

11. Thermochemische Behandlung nach einem der vorhergehenden Ansprüche, **dadurch gekennzeichnet, daß** sie in einer Vorrichtung durchgeführt wird, welche aufweist:
- einen ersten, zum Teil dichten Behälter, in dem die Reaktionsmittel vorzusehen und zur Reaktion zu bringen sind; wobei der erste Behälter vorteilhafterweise aus rostfreiem Stahl oder aus Grafit ist;
- einen zweiten Behälter, in dem der erste Behälter angeordnet wird; wobei der zweite Behälter gegenüber der umgebenden Atmosphäre abgedichtet und mit Mitteln verbunden ist, die geeignet sind, in seinem Inneren Wasserstoff, ein Edelgas oder ein Gemisch dieser Gase unter verringertem Druck zirkulieren zu lassen;
- Heizmittel zur Sicherstellung des Haltens und der Kontrolle der Behandlungstemperatur im Inneren der Behälter; wobei die Heizmittel vorteilhafterweise in der Lage sind, einen Temperaturunterschied von 20 bis 200 °C zwischen zwei Bereichen des ersten Behälters aufrechtzuerhalten.

## Claims

1. A pack-cementation thermochemical treatment for a carbon-containing material, which may optionally have open porosity, to generate a refractory carbide coating on its surface, and within said material if it is porous; said treatment comprising maintaining said material:
a) at a temperature in the range 700°C to 1300°C;
b) at a reduced pressure, in the range 0.1 kPa to 30 kPa, of hydrogen, a rare gas or a mixture of these gases;
c) in the presence of a donor pack constituted by at least one element E selected from titanium, zirconium, hafnium, tantalum, niobium, chromium, silicon, and boron, alloyed to an element M selected from aluminium, calcium, chromium, yttrium, and magnesium and optionally alloyed to a moderator element M'; said moderator element M' being necessarily used if E = M = Cr and then being other than chromium;
and a solid activating compound of low volatility at said treatment temperature, with formula MXₙ, where X consists of chlorine or fluorine, advantageously fluorine.

2. The thermochemical treatment according to claim 1, **characterized in that** said moderator element M' is a metal selected from iron, nickel, chromium, cobalt, molybdenum, and tungsten.

3. The thermochemical treatment according to claim 1 or claim 2, **characterized in that** the treated carbon-containing material has an open porosity in the range 2% to 98% and advantageously consists of a graphite part, a completely or partially densified carbon/carbon composite, a non densified fibrous carbon preform, a non densified preform based on SiC fibers pre-treated or non pre-treated to produce a superficial carbon layer, or a carbon foam.

4. The thermochemical treatment according to any one of claims 1 to 3, **characterized in that** said treated carbon-containing material is at least partially immersed in said pack or maintained in the gas phase, in a zone near to said pack.

5. The thermochemical treatment according to any one of claims 1 to 4, **characterized in that** said solid activating compound is in contact neither with said pack nor with the treated carbon-containing material; and it is advantageously maintained at a temperature which is 20°C to 200°C lower than the temperature of said treated carbon-containing material.

6. The thermochemical treatment according to any one of claims 1 to 5, **characterized in that** said donor pack has already been produced at atmospheric pressure, advantageously in the presence of an activating compound.

7. The thermochemical treatment according to any one of claims 1 to 6, **characterized in that** it further comprises an annealing heat treatment at a higher temperature to transform the multi-phase tantalum, niobium or chromium carbide coatings produced into mono-phase coatings.

8. The thermochemical treatment according to any one of claims 1 to 7, **characterized in that** it is carried out:
• at a temperature of less than 1050°C;
• at a reduced pressure of a rare gas selected from helium and argon, advantageously consisting of helium;
• in the presence of a donor Zr-Al pack and an AlF₃ activating compound, to generate a zirconium carbide coating.

9. The thermochemical treatment according to any one of claims 1 to 7, **characterized in that** it is carried out:
• at a temperature of less than 1050°C;
• at a reduced pressure of hydrogen;
• in the presence of a donor Ta-Cr pack and a CrF₃ activating compound, to generate a two-phase TaC + Ta₂C coating;
and **in that** it optionally comprises an additional annealing heat treatment, advantageously carried out at a temperature close to 1300°C, to generate a mono-phase TaC coating.

10. The thermochemical treatment according to any one of claims 1 to 7, **characterized in that** it is carried out:
• at a temperature of less than 1100°C;
• at a reduced pressure of hydrogen;
• in the presence of a donor B-Mg or B-Y pack and an MgF2 or YF₃ activating compound,
to generate a boron carbide coating.

11. The thermochemical treatment according to any one of the preceding claims, **characterized in that** it is carried out in an apparatus comprising:
• a first partially sealed chamber in which the reactants can be disposed and can react; said first chamber advantageously being produced from stainless steel or graphite;
• a second chamber, in which said first chamber is disposed; said second chamber being sealed against the ambient atmosphere and associated with means for circulating therein hydrogen, a rare gas or a mixture of these gases at a reduced pressure;
• heating means to ensure maintenance and control of the treatment temperature in said chambers; said heating means advantageously being capable of maintaining a temperature difference of 20°C to 200°C between two zones of the first chamber.
